# EUROPEAN PATENT APPLICATION

(11) **EP 3 957 663 A1**
(43) Date of publication of application: **23.02.2022**
(21) Application number: 20791724.6
(22) Date of filing: 10.04.2020
(51) Int. Cl.: C08G 12/16, C08K 5/3467, C08L 61/06, C08L 61/28, C09K 3/14

(54) **RESINOUS MATERIAL AND PRODUCTION METHOD THEREFOR**

(30) Priority: 19.04.2019 JP 2019079974
(71) Applicant: Sumitomo Bakelite Co.Ltd., Shinagawa-ku Tokyo 140-0002 (JP)
(72) Inventor: MIFUKA, Hajime, Tokyo 140-0002 (JP)
(74) Representative: Ter Meer Steinmeister & Partner
(86) International application number: PCT/JP2020/016085
(87) International publication number: WO 2020/213520

(57) **Abstract**

According to the present invention, A resin material including a phenolic resin and a dicyandiamide polymer finely dispersed in the phenolic resin; and a method for producing a resin material including a phenolic resin and a dicyandiamide polymer dispersed in the phenolic resin, the method including a step of preparing a resin composition including the phenolic resin and dicyandiamide and a step of heating the resin composition to polymerize the dicyandiamide and form the dicyandiamide polymer are provided.

## Description

### TECHNICAL FIELD

The present invention relates to a resin material and a method for producing the same. More specifically, the present invention relates to a resin material used for producing a heat-resistant molded product such as a friction material, and a method for producing the resin material.

### BACKGROUND ART

Since a phenolic resin has excellent characteristics such as heat resistance, mechanical strength, and moldability, in the related art, the phenolic resin has been used as a molding material, or has been used for various industrial materials after undergoing processing such as adhesion and impregnation. In recent years, a demand for improved heat resistance and durability has been further increased in materials used at high temperatures, for example, heat-resistant materials such as a friction material for automobiles. Therefore, phenolic resins used as binders for the heat-resistant materials have also been required to have further improvement in heat resistance and durability. In order to meet these demands, various techniques for reforming (modifying) the phenolic resin and improving heat resistance have been developed.

As a technique for improving the heat resistance of the heat-resistant material, for example, in Patent Document 1, a technique for obtaining a resin material for a wet friction material having high heat resistance and durability by using a triazine-modified resol-type phenolic resin obtained by reacting bisphenol, triazine, aldehydes, and phenol has been proposed.

### RELATED DOCUMENT

### PATENT DOCUMENT

[Patent Document 1] Japanese Unexamined Patent Publication No. 2013-142142

### SUMMARY OF THE INVENTION

### TECHNICAL PROBLEM

However, as a result of studies, the present inventor has found that, in the resin material of Patent Document 1, there is room for improvements in heat resistance and flame retardancy thereof.

### SOLUTION TO PROBLEM

An object of the present invention is to provide a resin material having excellent heat resistance and flame retardancy, and a method for producing such a resin material.

The present inventor has found that, by finely dispersing and blending a dicyandiamide polymer such as melamine in a phenolic resin, a resin cured product to be obtained has excellent heat resistance and flame retardancy, thereby completing the present invention.

According to the present invention, a resin material including a phenolic resin and a dicyandiamide polymer finely dispersed in the phenolic resin is provided.

In addition, according to the present invention, a method for producing a resin material including a phenolic resin and a dicyandiamide polymer dispersed in the phenolic resin, the method including a step of preparing a resin composition including the phenolic resin and dicyandiamide and a step of heating the resin composition to polymerize the dicyandiamide and form the dicyandiamide polymer, is provided.

### ADVANTAGEOUS EFFECTS OF INVENTION

According to the present invention, a resin material having excellent heat resistance and flame retardancy, and a method for producing such a resin material are provided.

### DESCRIPTION OF EMBODIMENTS

Hereinafter, embodiments of the present invention will be described.

### (Resin material)

The resin material according to the present embodiment includes a phenolic resin and a dicyandiamide polymer. In the resin material according to the present embodiment, the dicyandiamide polymer is finely dispersed in the phenolic resin. Here, the "dicyandiamide polymer is finely dispersed in the phenolic resin" means that fine particles of the dicyandiamide polymer having a particle size of approximately 1 µm to 30 µm are present in the phenolic resin without reacting with the phenolic resin.

In the present embodiment, the dicyandiamide polymer refers to a multimer of dicyandiamide produced by polymerizing dicyandiamide by heating at a temperature of 200°C to 220°C, and includes melamine, melam, melem, melom, 2,4,6-trimelanyl-s-triazine, and the like.

In the resin material according to the present embodiment, since the dicyandiamide polymer is finely dispersed in the phenolic resin, heat resistance and flame retardancy are excellent. The reason for this is that, since the dicyandiamide polymer is a compound having nitrogen as a main component, the dicyandiamide polymer decomposes into an inert gas in a high temperature environment, and this inert gas suppresses oxidative decomposition of the phenolic resin. In addition, as described above, the dicyandiamide polymer is an aggregate of a plurality of compounds such as melamine and melam, and the decomposition temperatures of these compounds are different from each other. Therefore, such a dicyandiamide polymer can be an inert gas in each temperature range, so that a flame-retardant effect can be obtained in a wide temperature range.

Due to the fine dispersion of the dicyandiamide polymer in the phenolic resin, the resin material according to the present embodiment has a high 50% weight loss temperature (Td50) as compared with resin materials obtained by pulverizing and mixing melamine, which is a dicyandiamide polymer, and a phenolic resin. The 50% weight loss temperature of the resin material according to the present embodiment is 500°C or higher, preferably 510°C or higher and more preferably 520°C or higher. The upper limit value of the 50% weight loss temperature of the resin material is, for example, 550°C or lower.

As the phenolic resin used in the resin material according to the present embodiment, a novolac-type phenolic resin is suitably used. The novolac-type phenolic resin is a phenolic resin obtained by reacting phenols and aldehydes under an acid catalyst. Examples of the novolac-type phenolic resin include phenol novolac-type resin, cresol novolac-type resin, resorcinol novolac-type resin, xylenol novolac-type resin, alkylphenol novolac-type resin, naphthol novolac-type resin, bisphenol A novolac-type resin, phenol aralkyl novolac-type resin, phenol diphenyl aralkyl novolac-type resin, phenol naphthalene novolac-type resin, phenol dicyclopentadiene novolac-type resin, and novolac-type modified phenolic resin with cashew nut oil, terpene, tall oil, rosin, rubber, and the like.

Examples of the phenols used to synthesize the novolac-type phenolic resin include phenol; cresols such as o-cresol, m-cresol, and p-cresol; xylenols such as 2, 3-xylenol, 2,4-xylenol, 2,5-xylenol, 2,6-xylenol, 3,4-xylenol, and 3,5-xylenol; ethylphenols such as o-ethylphenol, m-ethylphenol, and p-ethylphenol; isopropylphenol; butylphenols such as butylphenol and p-tert-butylphenol; alkylphenols such as p-tert-amylphenol, p-octylphenol, p-nonylphenol, and p-cumylphenol; monovalent phenol substitutions such as p-phenylphenol, aminophenol, nitrophenol, dinitrophenol, trinitrophenol, and cardanol; monohydric phenols such as 1-naphthol and 2-naphthol; polyhydric phenols such as resorcin, alkylresorcin, pyrogallol, catechol, alkylcatechol, hydroquinone, alkylhydroquinone, phloroglucin, bisphenol A, bisphenol F, bisphenol S, and dihydroxynaphthalin; and oils and fats such as cashew nut oil containing phenolic compounds. As the phenols, one type may be used alone, or two or more types may be used in combination.

Examples of the aldehydes used to synthesize the novolac-type phenolic resin include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, salicylaldehyde, and paraxylenedimethyl ether. As the aldehydes, one type may be used alone, or two or more types may be used in combination.

In the method for synthesizing the novolac-type phenolic resin by reacting the above-described phenols and aldehydes, the molar ratio (aldehydes/phenols) of the aldehydes to the phenols is preferably 0.5 to 0.9 and more preferably 0.55 to 0.87. By setting the molar ratio within the above-described range, a phenolic resin having a desired molecular weight can be obtained without gelation of the obtained reaction product.

Among the above-described novolac-type phenolic resins, from the viewpoint of heat resistance and flame retardancy of a resin material to be obtained, it is preferable to use a phenol novolac-type resin obtained by reacting phenol and formaldehyde.

Examples of the acid catalyst used to synthesize the novolac-type phenolic resin include organic acids such as oxalic acid, mineral acids such as hydrochloric acid, sulfuric acid, and phosphoric acid, diethylsulfate, paratoluenesulfonic acid, and paraphenolsulfonic acid.

In one embodiment, the amount of the dicyandiamide polymer in the resin material is 1% by mass or more and 60% by mass or less, preferably 5% by mass or more and 50% by mass or less and more preferably 10% by mass or more and 40% by mass or less with respect to the entire resin material. The resin material according to the present embodiment can have excellent heat resistance and flame retardancy even in a case where the amount of the dicyandiamide polymer is relatively small. In addition, the amount of the dicyandiamide polymer in the resin material can be appropriately changed by adjusting the amount of dicyandiamide used as a precursor of the dicyandiamide polymer in the production of the resin material described below.

In one embodiment, the resin material may include hexamethylenetetramine. The hexamethylenetetramine accelerates curing of the phenolic resin, and a resin material having excellent mechanical strength can be obtained. The amount of the hexamethylenetetramine is preferably 2% by mass or more and 20% by mass or less, more preferably 5%by mass or more and 17% by mass or less, and still more preferably 8% by mass or more and 15% by mass or less with respect to the phenolic resin. In a case where the blending amount of the hexamethylenetetramine is less than the above-described lower limit value, the curing of the phenolic resin may be insufficient, and in a case of being more than the above-described upper limit value, gas generated by decomposition of the hexamethylenetetramine may cause cracks or swelling in the cured product of the obtained resin material.

### (Production method of resin material)

The resin material according to the present embodiment is produced by a method including a step of preparing a resin mixture including the phenolic resin and dicyandiamide and a step of heating the resin mixture to polymerize the dicyandiamide and form the dicyandiamide polymer. According to the method of the present embodiment, a modified phenolic resin in which the dicyandiamide polymer is finely dispersed in the phenolic resin can be obtained.

The resin material according to the present embodiment can be produced by heating a mixture of the phenolic resin and dicyandiamide at a temperature of, for example, 200°C to 220°C for 30 minutes to 2 hours. The dicyandiamide is polymerized by heating to produce a dicyandiamide polymer. The produced dicyandiamide polymer is present in the phenolic resin as fine particles having a particle size of 1 µm to 30 µm. In a resin material obtained by melting and mixing the phenolic resin and the dicyandiamide polymer such as melamine, or in a resin material obtained by pulverizing and mixing the phenolic resin and the dicyandiamide polymer such as melamine, the dicyandiamide polymer is present in the phenolic resin as particles having a particle size on the order of several 100 µm.

### (Use)

The resin material according to the present embodiment is used as a friction material for brake pads, brake linings, clutch facings, and the like, and as a molding material for grindstones, industrial heat resistant materials, and the like. Such an article can be produced by heating the resin material according to the present embodiment under pressure. For example, the article can be produced by filling the resin mixture in a mold, heat-compressing the mold for 5 to 20 minutes under the conditions of 130°C to 180°C and 10 to 100 MPa, and post-curing at 160°C to 250°C as necessary.

The resin material according to the present embodiment may include additional additives depending on the intended use. For example, the resin material according to the present embodiment can include a curing catalyst. Examples of the curing catalyst include organic phosphine compounds such as triphenylphosphine and tributylphosphine, aromatic carboxylic acids such as benzoic acid and salicylic acid, dicarboxylic acids such as taric acid, and basic compounds such as inorganic basic compounds and organic basic compounds. In addition, these can be used alone or in combination of two or more thereof. The amount of the curing catalyst is preferably 0.1% by mass or more and 5% by mass or less and more preferably 0.5 % by mass or more and 5 % by mass or less with respect to the entire resin material. In a case where the blending ratio of the curing catalyst is the above-described lower limit value or more, the curing catalyst of the resin is sufficiently promoted. On the other hand, in a case of being the above-described upper limit value or less, a resin material having good mechanical strength can be obtained without lowering fluidity of the resin material during molding.

Examples of the inorganic basic compound used as the curing catalyst include alkali metal hydroxides and/or alkaline earth metal hydroxides, and specific examples thereof include sodium hydroxide, potassium hydroxide, calcium hydroxide, barium hydroxide, magnesium hydroxide, and aluminum hydroxide. In addition, one type of these can be used alone, or two or more types can be used in combination.

Examples of the organic basic compound used as the curing catalyst include aliphatic or alicyclic primary, secondary, or tertiary amines, aliphatic amines having an aromatic ring, aromatic amines, heterocyclic amines, and heterocyclic compounds such as nitrogen-containing aromatic heterocyclic compounds, imidazoles, sulfenamides, thiazoles, and azo compounds.

Examples of the organic basic compound used as the curing catalyst include triethylamine, benzyldimethylamine, α-methylbenzyldimethylamine, triethanolamine, n-butylamine, diphenylamine, ethylamine, diethylamine, triethylamine, dipropylamine, ethylenediamine, aniline, methylaniline, 1-aminoadamantan, 4-aminodiphenylamine, 1-naphthylamine, octadecylamine, diphenylamine, N-isopropyl-N'-phenyl-p-phenylenediamine, phenylamine, diphenylamine, triphenylamine, imidazoles, sulfenamides, thiazoles, 2-methylimidazole, 2-undecylimidazole, 2-heptadecylimidazole, 2-phenylimidazole, 2-phenyl-4-methylimidazole, 1-cyanoethyl-2-undecylimidazole, 1-cyanoethyl-2-phenylimidazole, 2,4-diamino-6-[2'-methylimidazolyl-(1')]-ethyl-s-triazine, 2,4-diamino-6-[2'-undecylimidazolyl-(1')]-ethyl-s-triazine, 2,4-diamino-6-[2'-ethyl-4'-methylimidazolyl-(1')]-ethyl-s-triazi ne, 2-phenyl-4,5-dihydroxymethylimidazole, 2-phenyl-4-methyl-5-hydroxymethylimidazole, 2,3-dihydro-1H-pyrrolo[1,2-a] benzimidazole, 2-methylimidazoline, 2-phenylimidazoline, 2,4-diamino-6-vinyl-s-triazine, 2,4-diamino-6-methacryloyloxyethyl-s-triazine, N-cyclohexyl-2-benzothiazole sulfenamide, N-oxydiethylene-2-benzothiazoline sulphenamide, N,N-dicyclohexyl-2-benzothiazolyl sulphenamide, 2-mercaptobenzothiazole, 2-(2,4-dinitrophenyl)mercaptobenzothiazole, 2-(2,4-dinitrophenylthio)mercaptobenzothiazole, 2-(2,6-diethyl-4-moriholinothio)benzothiazole, diazabicycloundecene, quinuclidine, piperazine, 1,4-diazabicyclo[2.2.2]octane, and cyclic polyamine. These can be used alone or in combination of two or more. Among these, since the cured product of the obtained resin material has improved mechanical strength, it is preferable to use 2-methylimidazole, 2-phenylimidazole, 2,4-diamino-6-[2'-methylimidazolyl-(1')]-ethyl-s-triazine, or nitrogen-containing aromatic heterocyclic compounds such as diazabicycloundecene. One type of these curing catalysts can be used alone, or two or more types can be used in combination.

In one embodiment, the resin material may include a filler to improve mechanical strength. Examples of the filler include a fiber base material and a filler.

Examples of the fiber base material include inorganic fibers such as steel fiber, copper fiber, glass fiber, ceramic fiber, and potassium titanate fiber, and organic fibers such as aramid fiber. In addition, these can be used alone or in combination of two or more thereof. The fiber base material can be used in an amount of 1% by mass or more and 20% by mass or less, preferably 5% by mass or more and 15% by mass or less with respect to the entire resin material, so that the obtained cured product has sufficient mechanical strength to be used as a friction material.

Examples of the filler include inorganic fillers such as calcium carbonate, calcium hydroxide, barium sulfate, mica, abrasive, kaolin, and talc, organic fillers such as cashew dust and rubber dust, and lubricants such as graphite, antimony trisulfide, molybdenum disulfide, and zinc disulfide. In addition, these can be used alone or in combination of two or more thereof. The content of the filler can be appropriately adjusted depending on the use of the obtained resin material. For example, the content of the filler can be 50% by mass or more and 90% by mass or less with respect to the entire resin material.

The embodiments of the present invention have been described above, but these are examples of the present invention and various configurations other than the above can be adopted.

### EXAMPLES

Hereinafter, the present invention will be described with reference to Examples and Comparative Examples, but the present invention is not limited thereto.

### (Synthesis Example 1: synthesis of phenolic resin)

A mixture of 1000 parts of phenol, 570 parts of 37% formalin, and 10 parts of oxalic acid was reacted at 100°C for 3 hours, the reaction mixture was dehydrated by atmospheric distillation until the temperature of the reaction mixture reached 140°C, and then the reaction mixture was dehydrated and demonomerized by vacuum distillation until the temperature of the reaction mixture reached 220°C while gradually reducing the pressure to 0.9 kPa, thereby obtaining 905 parts of a novolac-type phenolic resin. The softening point of the novolac-type phenolic resin was 88°C.

### (Preparation of modified phenolic resin)

### (Examples A1 and A2)

In each example, the phenolic resin and dicyandiamide were mixed in the blending amounts shown in Table 1, and heated at 220°C for 1 hour to obtain a modified phenolic resin. Details of the materials used in Table 1 are as follows.

### (Comparative Example A1)

The phenolic resin and melamine were pulverized and mixed using a small pulverizer in the blending amounts shown in Table 1 to obtain a modified phenolic resin having a median diameter of 30 µm.

### (Comparative Example A2)

A phenolic resin was obtained in the same manner as in Example 1, except that dicyandiamide was not used.

### (Comparative Example A3)

The phenolic resin and the melamine resin were pulverized and mixed in the blending amounts shown in Table 1 to obtain a modified phenolic resin.

### (Production of resin material and evaluation of characteristics)

### (Examples A1 and A2, and Comparative Examples A1 to A3)

12 parts by mass of hexamethylenetetramine was blended to 100 parts by mass of the modified phenolic resin obtained above, and the mixture was cured at 200°C for 1 hour to obtain a resin material. This resin material was pulverized with a small pulverizer to obtain a sample, and heat resistance was evaluated by measuring 50% weight loss temperature (°C) with TG-DTA under a sample amount of 10 mg, a temperature rising rate of 10 °C/min, a measurement temperature range of 30°C to 600°C, and an air atmosphere. Results are shown in Table 1.

Here, details of the components used in the resin material are as follows.
- Phenolic resin 1: novolac-type phenolic resin prepared in Synthesis Example 1
- Dicyandiamide: dicyandiamide manufactured by NIPPON CARBIDE INDUSTRIES CO., INC.
- Melamine: trade name "Melamine" manufactured by Nissan Chemical Corporation
- Melamine resin: trade name "Nikaresin S-260" manufactured by NIPPON CARBIDE INDUSTRIES CO., INC.
- Hexamethylenetetramine: trade name "Hexamine" manufactured by Mitsubishi Gas Chemical Trading, Inc.

**[Table 1]**

| | | Unit | Example A1 | Example A2 | Comparative Example A1 | Comparative Example A2 | Comparative Example A3 |
|---|---|---|---|---|---|---|---|
| Composition of modified phenolic resin | Phenolic resin | Part by mass | 100 | 100 | 100 | 100 | 100 |
| | Dicyandiamide | Part by mass | 10 | 50 | - | - | - |
| | Melamine | Part by mass | - | - | 50 | - | - |
| | Melamine resin | Part by mass | - | - | - | - | 50 |
| Evaluation of resin material | | | | | | | |
| 50% weight loss temperature | | °C | 533 | 525 | 490 | 495 | 498 |

### (Examples B1 and B2, and Comparative Examples B1 to B3)

### (Production of friction material)

The resin material prepared above, aramid fiber as a fiber base material, calcium carbonate as an inorganic filler, and barium sulfate were mixed in the blending shown in Table 2 to obtain a mixture for a friction material. The obtained mixture for a friction material was cured and molded at a temperature of 150°C and a pressure of 15 MPa for 240 seconds, and the obtained cured product was baked at 200°C for 3 hours to produce a molded product (friction material).

### (Performance evaluation of friction material)

The obtained molded product was cut into a length of 40 mm, a thickness of 6 mm, and a width of 13 mm to obtain a sample, and as an index of the mechanical strength, bending strength was measured based on JIS K 7171. Results are shown in Table 2 as "Bending strength before heat treatment".

Further, the above-described sample was heat-treated at 350°C for 4 hours, and the bending strength after heat treatment was measured based on JIS K 7171. Results are shown in Table 2 as "Bending strength after heat treatment".

Details of the materials shown in Table 2 are as follows.

### (Resin material)

- Resin material A: resin material of Example A1
- Resin material B: resin material of Example A2
- Resin material C: resin material of Comparative Example A1
- Resin material D: resin material of Comparative Example A2
- Resin material E: resin material of Comparative Example A3

### (Fiber base material)

- Aramid fiber: trade name "Kevlar" manufactured by DuPont

### (Inorganic filler)

- Calcium carbonate: calcium carbonate manufactured by Sankyo Seifun Co., Ltd.
- Barium sulfate: barium sulfate manufactured by Sakai Chemical Industry Co., Ltd.

**[Table 2]**

| | | Unit | Example B1 | Example B2 | Comparative Example B1 | Comparative Example B2 | Comparative Example B3 |
|---|---|---|---|---|---|---|---|
| Composition of friction material | Resin material A | Part by mass | 10 | - | - | - | - |
| | Resin material B | Part by mass | - | 10 | - | - | - |
| | Resin material C | Part by mass | - | - | 10 | - | - |
| | Resin material D | Part by mass | - | - | - | 10 | - |
| | Resin material E | Part by mass | - | - | - | - | 10 |
| | Aramid fiber | Part by mass | 5 | 5 | 5 | 5 | 5 |
| | Calcium carbonate | Part by mass | 45 | 45 | 45 | 45 | 45 |
| | Barium sulfate | Part by mass | 40 | 40 | 40 | 40 | 40 |
| Evaluation of friction material | | | | | | | |
| Bending strength | Bending strength before heat treatment | MPa | 19.9 | 17.4 | 14.4 | 20.4 | 17.2 |
| | Bending strength after heat treatment | MPa | 3.6 | 3.5 | 3.4 | 0.5 | 1.5 |

The friction materials of Examples had a higher bending strength after heat treatment at 350°C than the friction materials of Comparative Examples.

Priority is claimed on Japanese Patent Application No. 2019-079974, filed April 19, 2019, the disclosure of which is incorporated herein by reference.

## Claims

1. A resin material comprising:
a phenolic resin; and
a dicyandiamide polymer finely dispersed in the phenolic resin.

2. The resin material according to Claim 1,
wherein a 50% weight loss temperature (Td50) of the resin material is 500°C or higher.

3. The resin material according to Claim 1 or 2,
wherein the dicyandiamide polymer is in an amount of 1% by mass or more and 60% by mass or less with respect to the entire resin material.

4. The resin material according to any one of Claims 1 to 3, further comprising:
hexamethylenetetramine.

5. The resin material according to any one of Claims 1 to 4,
wherein the resin material is used for a friction material, a grindstone, or a molding material.

6. A method for producing a resin material including a phenolic resin and a dicyandiamide polymer dispersed in the phenolic resin, the method comprising:
a step of preparing a resin mixture including the phenolic resin and dicyandiamide; and
a step of heating the resin mixture to polymerize the dicyandiamide and form the dicyandiamide polymer.
